# DEMANDE DE BREVET EUROPEEN

(11) **EP 4 670 508 A1**
(43) Date de publication de la demande: **31.12.2025**
(21) Numéro de dépôt: 25185995.5
(22) Date de dépôt: 27.06.2025
(51) Int. Cl.: A23G 9/12, A23G 9/22, A47J 43/06, A47J 43/07, A47J 43/044

(54) **RECEPTACLE REFRIGERANT D'UN APPAREIL DE PREPARATION CULINAIRE**

(30) Priorité: 27.06.2024 FR 2406988
(71) Demandeur: SEB S.A., 69130 Ecully (FR)
(72) Inventeur: GONÇALVES DE OLIVEIRA CHUEIRE, Pedro Henrique, 69134 ECULLY CEDEX (FR); BLOND, Laurent, 69134 ECULLY CEDEX (FR)
(74) Mandataire: SEB Développement

(57) **Abrégé**

L'invention concerne un réceptacle (1) pour des préparations culinaires froides telles que des glaces, des sorbets ou des yaourts glacés, lequel est apte à être logé de manière amovible dans un bol (101) d'un appareil (100) de préparation culinaire pour former un contenant (2) en partie supérieure (3) duquel peuvent être introduits des ingrédients de la préparation culinaire et un outil de traitement culinaire.

Selon l'invention, ledit réceptacle (1) comprend une base réfrigérante (4) et une paroi annulaire (5) montée amovible sur la base réfrigérante (4), la base réfrigérante (4) comprenant une surface supérieure (6) et un contour annulaire (7), un système d'assemblage (8) étant agencé entre une face externe (9) du contour annulaire (7) et une face interne (10) de la paroi annulaire (5) et configuré pour permettre un verrouillage étanche entre la face externe (9) et la face interne (10) lors d'une introduction de la base réfrigérante (4) dans la paroi annulaire (5), de sorte que la surface supérieure (6) et la face interne (10) définissent ledit contenant (2) une fois le réceptacle (1) formé, et pour permettre un déverrouillage de la face externe (9) et de la face interne (10) de sorte à pouvoir séparer la base réfrigérante (4) de la paroi annulaire (5) une fois le réceptacle (1) extrait du bol (101).

## Description

### Domaine technique

La présente invention concerne le domaine des appareils de préparation culinaire et porte plus précisément sur un réceptacle pour des préparations culinaires froides telles que des glaces, des sorbets ou des yaourts glacés, ledit réceptacle étant apte à être logé de manière amovible dans un bol d'un appareil de préparation culinaire et à recevoir les ingrédients de la préparation culinaire froide afin de les refroidir durant leur traitement et d'aboutir à ladite préparation culinaire froide.

### Etat de la technique

Les appareils de préparation culinaire qui permettent la réalisation de préparations culinaires froide sont déjà connus de l'homme du métier. Il est connu tout particulièrement les demandes de brevet australien AU2020100186 et AU2020100187, lesquelles décrivent un appareil de préparation culinaire comprenant un corps qui présente une base et une tête s'étendant au-dessus de la base. La tête peut recevoir un outil de traitement culinaire et comprend un système d'entraînement de l'outil de traitement culinaire. L'appareil de préparation culinaire comprend également un bol qui s'engage sur la base et un réceptacle qui se loge dans le bol de manière amovible. La tête peut être placée soit dans une position engagée où l'outil de traitement culinaire se loge dans le réceptacle placé dans le bol et est apte à racler une paroi interne du réceptacle lors de sa mise en rotation, soit dans une position dégagée où l'outil de traitement culinaire est éloigné du dessus du bol, permettant l'extraction du réceptacle hors du bol. Le réceptacle forme un contenant en partie supérieure duquel peuvent être introduits des ingrédients de la préparation culinaire et l'outil de traitement culinaire. Le réceptacle comprend une coque interne réfrigérante qui présente une paroi annulaire et un fond définissant le contenant. Le réceptacle comprend une coque externe dans laquelle est disposée avec un espacement la coque interne, cet espacement définissant une chambre étanche contenant du liquide réfrigérant permettant de maintenir froide la coque interne pendant un certain temps.

Lors de l'usage, le réceptacle est placé dans un compartiment de congélation d'un appareil électro-ménager frigorifique, plus généralement appeler un congélateur ou un réfrigérateur équipé d'un tel compartiment de congélation, de sorte à refroidir le liquide réfrigérant dans la chambre étanche. Une fois prêt à l'emploi, le réceptacle est extrait du compartiment de congélation et placé dans le bol de l'appareil de préparation culinaire. Les ingrédients placés dans le réceptacle entrent en contact avec la coque interne réfrigérée, leur traitement au moyen de l'outil de traitement culinaire permettant l'obtention de la préparation culinaire froide.

Cette conception du réceptacle décrite dans les demandes de brevet australien AU2020100186 et AU2020100187 présente pour inconvénient principal d'être encombrante, ce qui impose de disposer de suffisamment de place dans le compartiment de congélation pour le placer dans celui-ci.

Un réceptacle selon le préambule de la revendication 1 est connu du document GB2598561.

### Résumé de l'invention

La présente invention permet de pallier cet inconvénient mentionné ci-avant. A cet effet, l'invention concerne un réceptacle pour des préparations culinaires froides telles que des glaces, des sorbets ou des yaourts glacés. Le réceptacle est apte à être logé de manière amovible dans un bol d'un appareil de préparation culinaire pour former un contenant en partie supérieure duquel peuvent être introduits des ingrédients de la préparation culinaire et un outil de traitement culinaire. Selon l'invention, le réceptacle comprend une base réfrigérante et une paroi annulaire montée amovible sur la base réfrigérante. La base réfrigérante comprend une surface supérieure et un contour annulaire. Un système d'assemblage est agencé entre une face externe du contour annulaire et une face interne de la paroi annulaire. Le système d'assemblage est configuré, d'une part, pour permettre un verrouillage étanche entre la face externe et la face interne lors d'une introduction de la base réfrigérante dans la paroi annulaire, de sorte que la surface supérieure et la face interne définissent ledit contenant une fois le réceptacle formé et, d'autre part, pour permettre un déverrouillage de la face externe et de la face interne de sorte à pouvoir séparer la base réfrigérante de la paroi annulaire une fois le réceptacle extrait du bol.

Ainsi, lors de l'usage, le réceptacle permet de séparer la base réfrigérante de la paroi annulaire pour positionner uniquement la base réfrigérante dans un compartiment de congélation d'un appareil électro-ménager frigorifique. Une fois la base réfrigérante prête à l'usage, après être restée suffisamment longtemps dans le compartiment de congélation, par exemple environ dix-huit heures, l'utilisateur peut réassembler la base réfrigérante et la paroi annulaire pour reconstituer le contenant et le positionner dans le bol de l'appareil de préparation culinaire. Lorsque le réceptacle n'est pas utilisé, c'est-à-dire lorsque le bol est utilisé seul pour des préparation culinaires autres que des préparations culinaires froides, la base réfrigérante peut être désassemblée de la paroi annulaire tout en restant logée dans la paroi annulaire, ce qui permet de réduire la hauteur de l'ensemble (réceptacle démonté) à la hauteur de la paroi annulaire, si la hauteur de celle-ci est supérieure à celle de la base réfrigérante, ou à la hauteur de la base réfrigérante, si, inversement, la hauteur de celle-ci est supérieure à celle de la paroi annulaire.

Selon une réalisation du réceptacle objet de l'invention, la surface supérieure est plane. Des variantes de réalisation du réceptacle restent cependant envisageables avec une surface supérieure non plane, par exemple une surface supérieure concave ou convexe. La forme de la surface plane dépendra de la forme et des mouvements de l'outil de traitement se déplaçant dans le contenant durant le traitement des ingrédients de la préparation culinaire ou, inversement, conditionnera la forme et les mouvements dudit outil de traitement.

De préférence, selon cette réalisation précitée du réceptacle objet de l'invention, la surface supérieure forme un disque défini dans un plan perpendiculaire à un axe médian de la base réfrigérante. D'autres formes de la surface supérieure restent envisageables, par exemple une forme ovale ou elliptique définie dans un plan perpendiculaire à un axe médian de la base réfrigérante.

Selon une réalisation du réceptacle objet de l'invention, la paroi annulaire comprend au moins un organe de préhension. Cela facilitera le positionnement du réceptacle dans le bol et, inversement, son retrait dudit bol. De préférence, la paroi annulaire comprend deux organes de préhension diamétralement opposés, ce qui permettra de manipuler le réceptacle avec les deux mains en le maintenant convenablement, sans risque de déverser hors du réceptacle la préparation culinaire froide, lorsque le réceptacle est retiré du bol.

Selon une réalisation du réceptacle objet de l'invention, la base réfrigérante comprend une pièce en matériau conducteur thermique, de préférence en aluminium, la pièce comprenant la surface supérieure. Par ailleurs, la base réfrigérante comprend une enceinte en matière plastique, tenant aux températures négatives rencontrées dans les congélateurs, par exemple en polyéthylène (PE), en polypropylène (PP), en polyamide (PA) ou en acrylonitrile butadiène styrène (ABS), munie d'une ouverture supérieure, ladite pièce étant configurée pour fermer ladite ouverture supérieure. En outre, la base réfrigérante comprend un matériau à changement de phase contenu dans l'enceinte. De préférence, la pièce comprend sur sa face inférieure des ailettes logées dans l'enceinte et s'étendant dans le matériau à changement de phase, de telles ailettes favorisant un transfert thermique homogène entre la pièce et le matériau à changement de phase pour que la préparation culinaire froide en cours de traitement dans le contenant refroidisse de manière homogène. De préférence, l'enceinte comprend une embase sur la face inférieure de laquelle sont agencés des patins, lesdits patins étant aptes à venir au contact d'un fond du bol lors de l'introduction du réceptacle dans le bol. De préférence, ces patins sont en caoutchouc ou en silicone. Ces patins garantissent un parfait positionnement de la surface supérieure lors de l'insertion du réceptacle dans le bol, ce qui évite d'exercer des efforts sur l'outil de traitement lors de son activation dus à un mauvais positionnement de la face supérieure. Ces patins garantissent aussi un parfait contact de l'outil de traitement avec la surface supérieure, en se comprimant légèrement de sorte à absorber la force exercée par l'outil de traitement sur la surface supérieure. En outre, ces patins assurent également une parfaite adhérence du réceptacle posé sur le fond du bol, ce qui empêche le réceptacle de tourner dans le bol durant l'activation de l'outil de traitement.

Selon une réalisation du réceptacle objet de l'invention, le système d'assemblage comprend, sur la face externe du contour annulaire, un épaulement externe et une gorge et, sur la face interne de la paroi annulaire, un épaulement interne apte à recevoir en appui l'épaulement externe lors de l'introduction de la base réfrigérante dans la paroi annulaire et un dispositif d'enclenchement qui comporte au moins un élément protubérant apte à s'engager dans la gorge lorsque l'épaulement externe entre en appui sur l'épaulement interne. En outre, le dispositif d'enclenchement comprend des moyens de rappel de l'au moins un élément protubérant en position engagée dans la gorge et au moins un organe de commande configuré pour dégager l'au moins un élément protubérant de la gorge. D'autres réalisations du système d'assemblage restent envisageables dans le cadre de l'invention.

L'invention concerne également un appareil de préparation culinaire, lequel comprend un corps présentant une base et une tête s'étendant au-dessus de la base. Ledit appareil comprend également un bol configuré pour être engagé sur la base, la tête étant configurée pour recevoir un outil de traitement culinaire et comprenant un système d'entraînement de l'outil de traitement culinaire selon un mouvement planétaire. En outre, ledit appareil comprend un réceptacle présentant au moins les caractéristiques essentielles précitées objets de l'invention. Le réceptacle est configuré pour épouser le bol lors de son introduction dans celui-ci. La tête est configurée pour être déplacée dans une position engagée où l'outil de traitement culinaire se loge dans le contenant du réceptacle placé dans le bol et est apte à racler la surface supérieure lors de sa mise en mouvement planétaire ou dans une position dégagée où l'outil de traitement culinaire est éloigné du dessus du bol, permettant l'extraction du réceptacle hors du bol.

Selon une réalisation de l'appareil de préparation culinaire objet de l'invention, la tête est montée pivotante vis-à-vis du corps pour pivoter de la position engagée vers la position dégagée, et vice-versa. Une variante pourrait être envisagée avec une tête montée en translation verticale vis-à-vis du corps pour translater en position engagée ou en position dégagée.

Selon une réalisation de l'appareil de préparation culinaire objet de l'invention, la surface supérieure de la base réfrigérante est plane et forme un disque perpendiculaire à un axe de rotation de l'outil de traitement culinaire. En outre, l'outil de traitement culinaire comprend une lame agencée perpendiculairement à l'axe de rotation et raclant le disque durant sa mise en mouvement planétaire.

### Brève description des figures

La description suivante met en évidence les caractéristiques et avantages de la présente invention. Cette description s'appuie sur des figures, parmi lesquelles :
- la [Fig. 1] illustre une vue d'ensemble d'un appareil de préparation culinaire objet de l'invention ;
- la [Fig. 2] illustre une vue en coupe de l'appareil illustré en [Fig. 1] ;
- la [Fig. 3] illustre l'appareil de la [Fig.1], sans le bol et le réceptacle objet de l'invention ;
- la [Fig. 4] illustre une conception préférentielle d'un outil de traitement culinaire ;
- la [Fig. 5] illustre une vue d'ensemble d'une réalisation préférentielle du réceptacle objet de l'invention ;
- la [Fig. 6] illustre le réceptacle de la [Fig. 5] positionné dans le bol, l'outil de traitement culinaire de la [Fig. 4] étant en contact d'une surface supérieure d'une base réfrigérante du réceptacle ;
- la [Fig. 7] illustre le réceptacle de la [Fig. 5] vu en coupe ;
- la [Fig. 8] illustre le réceptacle de la [Fig. 5] placé dans le bol, lesdits éléments étant vus en coupe ;
- la [Fig. 9] illustre une réalisation préférentielle d'une base réfrigérante du réceptacle, l'outil de traitement culinaire de la [Fig. 4] étant en contact d'une surface supérieure de la base réfrigérante ;
- la [Fig. 10] illustre une réalisation préférentielle d'une pièce en matériau conducteur thermique de la base réfrigérante ;
- la [Fig. 11] illustre une réalisation préférentielle d'une enceinte en matière plastique de la base réfrigérante, laquelle est destinée à recevoir un matériau à changement de phase ;
- la [Fig. 12] illustre une première vue d'une paroi annulaire du réceptacle de la [Fig. 5] ;
- la [Fig. 13] illustre une seconde vue de la paroi annulaire de la [Fig. 12] ;
- la [Fig. 14] illustre l'outil de traitement culinaire de la [Fig. 4] selon un autre angle de vue ;
- la [Fig. 15] illustre une vue de dessus de la pièce en matériau conducteur thermique de la [Fig. 10], l'outil de traitement culinaire de la [Fig. 4] étant partiellement représenté avec sa seconde partie en appui sur la surface supérieure de la base réfrigérante.

### Description détaillée

Dans la suite de la description, sans indication contraire, le terme appareil désigne l'appareil de préparation culinaire objet de l'invention. De même, sans indication contraire, le terme outil désigne l'outil de traitement culinaire.

Dans la suite de la description, les termes tels que « horizontal », « vertical », « inférieur », « supérieur », « haut », « bas » ... qui pourraient être employés, le seront en considération de la position normale de l'appareil, du bol ou du réceptacle, reposant en situation d'usage sur un plan de travail horizontal, par exemple une table ou un plan de cuisine.

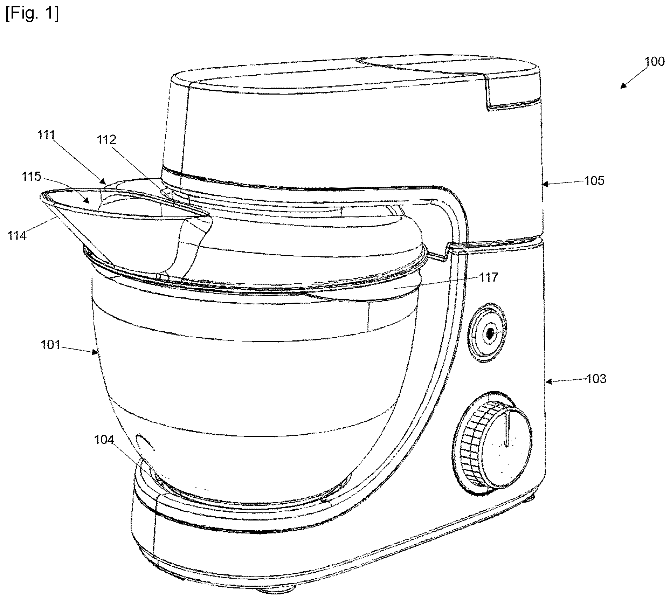

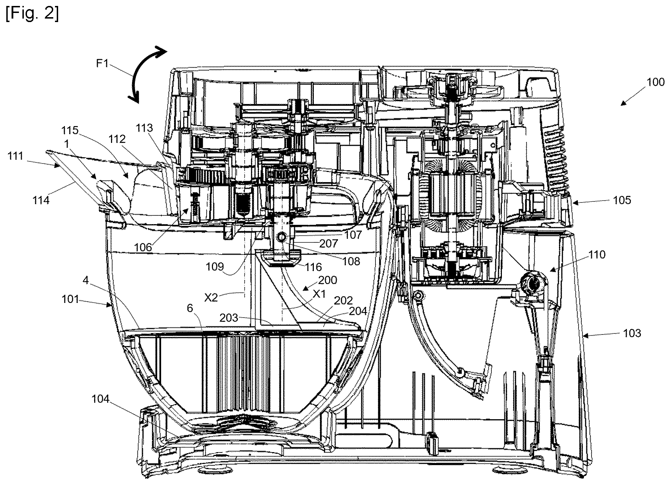

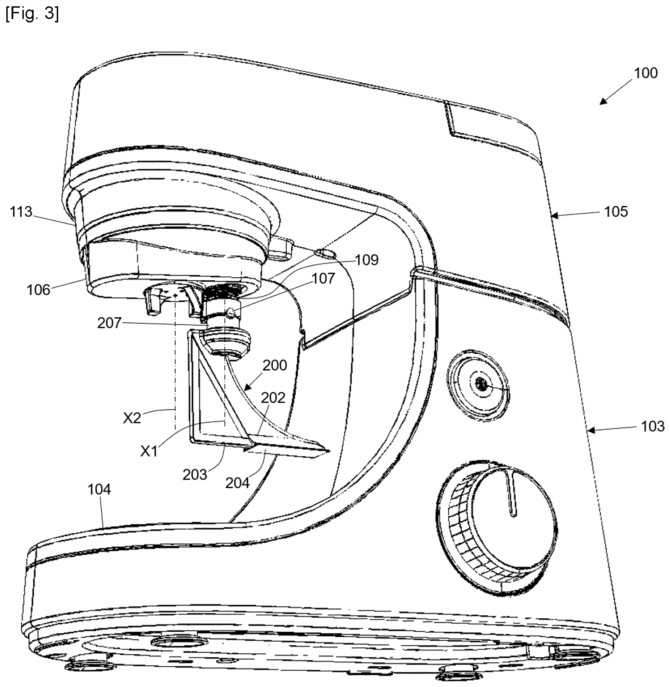

Les [Fig. 1], [Fig. 2] et [Fig. 3] illustrent une réalisation de l'appareil 100 qui comprend un corps 103, une tête 105, un bol 101 qui se positionne sur une base 104 du corps 103 et un outil 200 qui se monte sur la tête 105 et vient se loger dans le bol 101. La tête 105 est montée à pivotement vis-à-vis du corps 103 au moyen d'une charnière 110 qui permet de basculer ladite tête 105 selon le sens de la double flèche F1 illustrée [Fig. 2] pour la placer soit dans une position engagée où l'outil 200 est disposé dans le bol 101 et peut être activé pour réaliser un traitement culinaire sur des ingrédients placés dans le bol 101, soit dans une position dégagée où l'outil 200 est disposé hors du bol 101 pour accéder à celui-ci et éventuellement le retirer de la base 104 de l'appareil 100 ou retirer ce que contient ledit bol 101.

L'activation de l'outil 200 est réalisée au moyen d'un système d'entraînement 106 qui est agencé sur la tête 105 et configuré pour engendrer un mouvement planétaire de l'outil 200 qui tourne sur lui-même autour d'un premier axe X1 de rotation, ledit premier axe X1 tournant également autour d'un second axe X2 de rotation. Le système d'entraînement 106 comprend un arbre de rotation 108 qui s'étend longitudinalement selon le premier axe X1 et tourne autour dudit premier axe X. Cet arbre de rotation 108 est accouplé avec l'outil 200, comme cela sera expliqué ensuite. Le bol 101 est fermé par un couvercle 111 qui comprend une ouverture centrale 112 permettant le passage de l'outil 200 et d'une partie 113 de la tête 105 comportant le système d'entraînement 106, comme le montre la [Fig. 2], lors du positionnement de la tête 105 dans la position engagée. Le couvercle 111 comprend également un bec 114 muni d'une ouverture 115 permettant l'introduction des ingrédients d'une préparation culinaire lorsque le couvercle 111 est placé sur le bol 101.

L'appareil 100 est conçu pour réaliser divers types de préparations culinaires, y compris des préparations culinaires froides telles que des glaces, des sorbets ou des yaourts glacés. Pour cela, l'appareil 100 comprend un réceptacle 1 et un outil 200 spécialement adaptés à la réalisation de telles préparations culinaires froides, le réceptacle 1 étant configuré pour venir se loger de manière amovible dans le bol 101 afin de permettre son retrait et d'utiliser le bol 101 pour la réalisation d'autres types de préparations culinaires ne nécessitant pas la présence dudit réceptacle 1, l'appareil 100 comportant d'autres outils de traitement culinaire que l'outil 200 illustré et décrit ci-après.

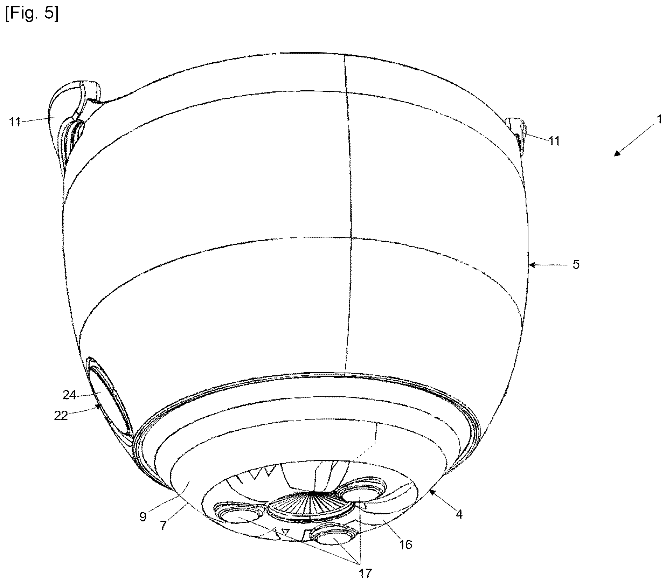

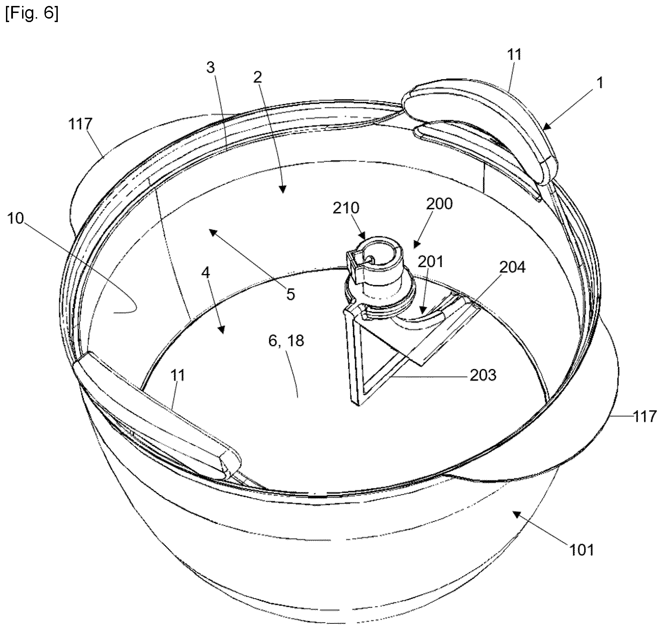

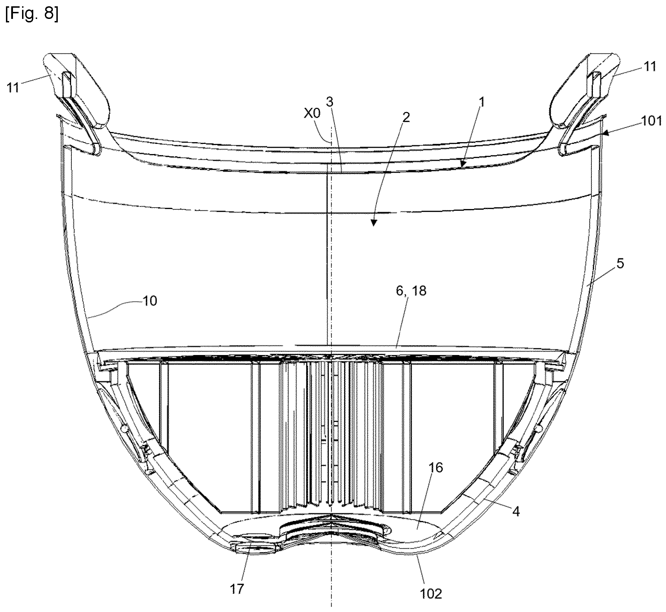

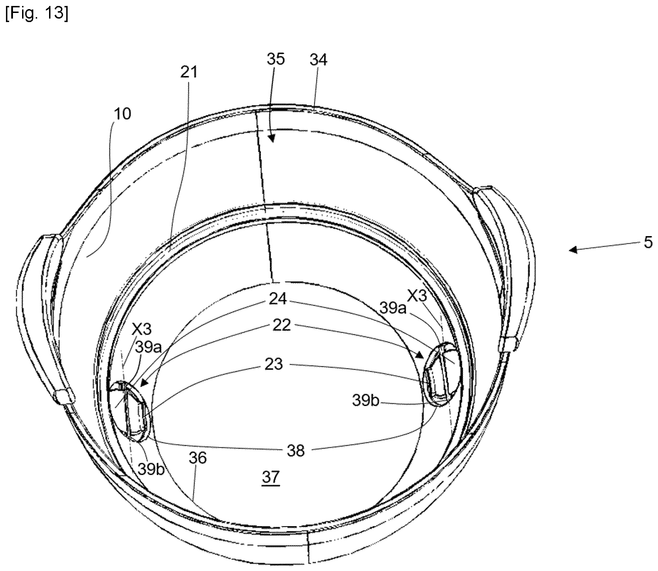

Les [Fig. 5] à [Fig. 13] détaillent une conception préférentielle du réceptacle 1. Le réceptacle 1 comprend une base réfrigérante 4 et une paroi annulaire 5 qui, lorsqu'elles sont assemblées entre elles grâce à un système d'assemblage 8, définissent un contenant 2 qui présente en partie supérieure 3 une ouverture 35 permettant l'introduction d'ingrédients de la préparation culinaire froide à réaliser et aussi l'introduction de l'outil 200 à l'intérieur dudit contenant 2. Lorsque le réceptacle 1 est formé, celui-ci peut être placé dans le bol 101, comme le montrent notamment les [Fig. 6] et [Fig. 8]. Pour faciliter la manipulation du réceptacle 1, celui-ci comporte deux organes de préhension 11 qui sont diamétralement opposés. Le bol 101 comprend également deux organes de préhension 117 diamétralement opposés, pour faciliter sa manipulation.

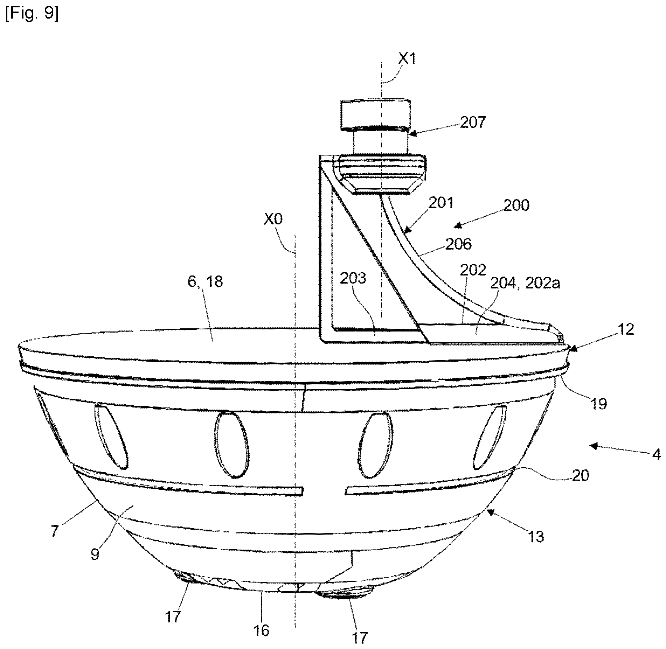

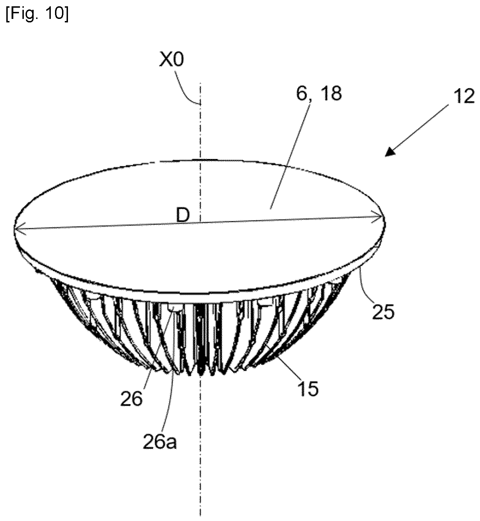

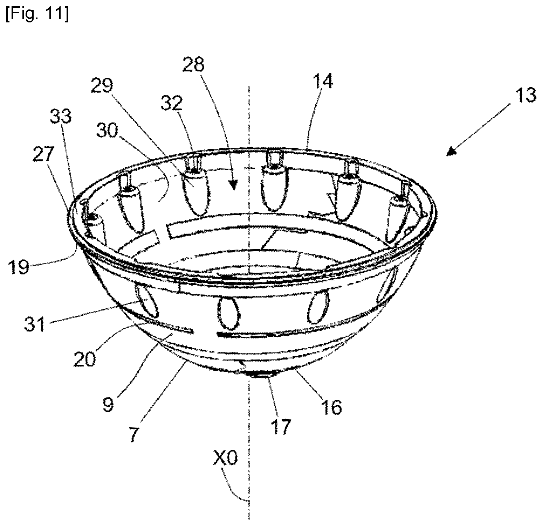

En regard notamment des [Fig. 9] à [Fig. 11], la base réfrigérante 4 comprend une pièce 12 et une enceinte 13. La pièce 12 est constituée dans un matériau présentant une bonne conduction thermique, de préférence de l'aluminium, d'autres matériaux présentant une bonne conduction thermique pouvant être envisagés. La pièce 12 comprend une surface supérieure 6 qui, de préférence, est plane et présente la forme d'un disque 18, d'autres formes pouvant être envisagées, par exemple une forme ovale ou elliptique. Ce disque 18 est défini dans un plan perpendiculaire à un axe médian X0 de la base réfrigérante 4. La pièce 12 comprend sur sa face inférieure 25 des ailettes 15 espacées les unes des autres et réparties uniformément en-dessous ladite face inférieure 25 en s'étendant radialement et vers le bas, comme le montre la [Fig. 10]. La pièce 12 comprend des premiers plots 26 répartis uniformément à la périphérie du disque 18, en-dessous de la face inférieure 25, ces premiers plots 26 comportant sur leur côté inférieur 26a un trou taraudé (non illustré). L'enceinte 13 définit une cuvette qui permet la réception d'un fluide à changement de phase qui de préférence peut former un fluide liquide, un fluide légèrement pâteux étant envisageable. De préférence, ce fluide est un liquide eutectique. L'enceinte 13 comprend un contour annulaire 7 qui est délimité en partie inférieure par une embase 16 et en partie supérieure par un rebord 27 qui définit une ouverture supérieure 28. Ce rebord 27 définit également avec la face externe 9 du contour annulaire 7 un épaulement externe 19. L'ouverture supérieure 28 permet d'introduire dans l'enceinte 13 les ailettes 15 de la pièce 12, lesquelles viennent ainsi baigner dans le fluide à changement de phase (non illustré) que contient ladite enceinte 13. Le bord périphérique de la face inférieure 25 de la pièce 12 vient alors en appui sur le rebord 27. Le contour annulaire 7 comprend sur sa face externe 9 une gorge 20.

Des seconds plots 29 s'étendent vers le haut depuis une face interne 30 du contour annulaire 7, ces seconds plots 29 étant au même nombre que les premiers plots 26 sur la pièce 12 et disposés avec la même répartition que lesdits premiers plots 26. Les seconds plots 29 sont creux et débouchent sur des orifices 31 sur la face externe 9 du contour annulaire 7. Un trou débouchant 32 sur le second plot 29 permet le passage d'un corps fileté d'une vis d'assemblage (non illustrée) introduite depuis l'orifice 31 et l'arrêt de la tête de cette vis d'assemblage, le corps fileté de la vis d'assemblage traversant le trou débouchant 32 pour venir se visser dans un trou taraudé sur un premier plot 26, une fois la pièce 12 placée sur l'enceinte 13 comme sur la [Fig. 9]. Un joint d'étanchéité 33 est placé sur le rebord 27 pour assurer l'étanchéité entre la pièce 12 et l'enceinte 13 une fois la base réfrigérante 4 constituée.

L'embase 16 de l'enceinte 13 comprend des patins 17, de préférence au nombre de trois, uniformément répartis, comme le montre notamment la [Fig. 5]. Lorsque la base réfrigérante 4 est placée dans le bol 101, les patins 17 viennent en contact avec le fond 102 du bol 101, la paroi annulaire 5 et le contour annulaire 7 épousant la forme du bol 101, comme le montre notamment la [Fig. 8]. Cela permet de maintenir statique le réceptacle 1 dans le bol 101 en évitant que ledit réceptacle 1 tourne dans ledit bol 101, lorsque l'outil 200 est activé en mouvement planétaire. Cela permet aussi de stabiliser convenablement le réceptacle 1 dans le bol 101, en appui sur le fond 102.

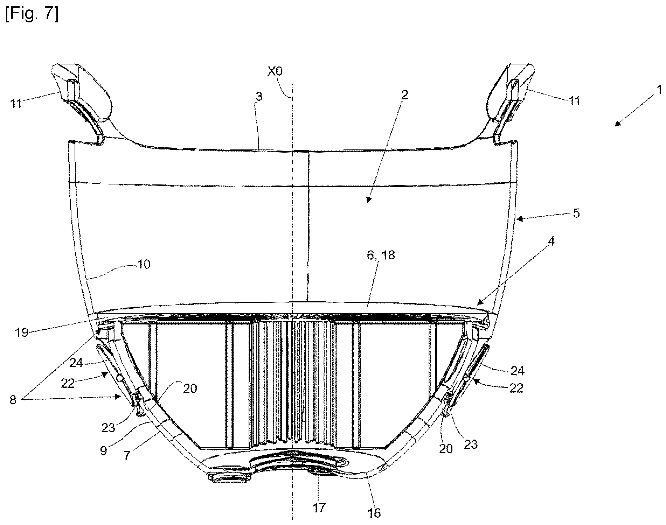

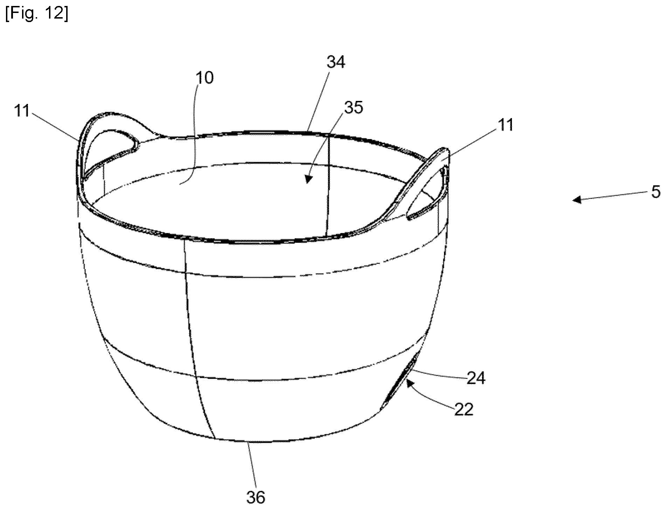

En regard notamment des [Fig. 7], [Fig. 12] et [Fig. 13], la paroi annulaire 5 comprend un bord supérieur 34 définissant une ouverture supérieure 35 correspondant à celle en partie supérieure 3 du contenant 2 défini par l'assemblage de la paroi annulaire 5 avec la base réfrigérante 4. Les organes de préhension 11 s'étendent vers le haut depuis le bord supérieur 34. La paroi annulaire 5 comprend également un bord inférieur 36 définissant une ouverture inférieure 37. La paroi annulaire 5 comprend une face interne 10 qui comporte un épaulement interne 21.

Un dispositif d'enclenchement 22 est agencé sur la paroi annulaire 5, en-dessous de l'épaulement interne 21. Ce dispositif d'enclenchement 22 comprend de préférence deux organes de commande 24 diamétralement opposés sur la paroi annulaire 5 et disposés chacun dans une fenêtre 38 agencée sur la paroi annulaire 5, chaque organe de commande 24 étant relié à la fenêtre 38 respective grâce à deux points d'attache 39a, 39b qui définissent un axe de pivotement X3 s'étendant perpendiculairement à l'axe médian X0 de la base réfrigérante 4 qui est également l'axe médian de la paroi annulaire 5. Les organes de commande 24 et la paroi annulaire 5 sont formés d'une seule pièce dans une matière plastique, par exemple en polyéthylène (PE) ou en polypropylène (PP), offrant ainsi une légère élasticité qui permet de faire pivoter les organes de commande 24 autour de leurs axes de pivotement X3 respectifs en appuyant légèrement sur lesdits organes de commande 24. Ce pivotement des organes de commande 24 permet d'exercer une torsion sur les points d'attache 39a, 39b, les organes de commande 24 reprenant leur position normale grâce à l'élasticité de la matière plastique lorsque l'on cesse d'appuyer sur lesdits organes de commande 24, les points d'attache 39a, 39b reprenant leur état normal (non tordus) du fait de l'élasticité de la matière.

Ces organes de commande 24 comprennent chacun un élément protubérant 23 orienté du côté de la face interne 10 de la paroi annulaire 5. La base réfrigérante 4 est introduite par le haut dans la paroi annulaire 5, en passant par l'ouverture supérieure 35. La base réfrigérante 4 descend ensuite dans la paroi annulaire 5 et ressort en partie par l'ouverture inférieure 37, jusqu'à ce que l'épaulement externe 19 sur la base réfrigérante 4 vienne en appui sur l'épaulement interne 21 sur la face interne 10 de la paroi annulaire 5. Durant cette introduction de la base réfrigérante 4 à l'intérieur de la paroi annulaire 5, les éléments protubérants 23 sur les organes de commande 24 viennent en appui contre la paroi externe 9 du contour annulaire 7 de la base réfrigérante 4, ce qui fait pivoter légèrement les organes de commande 24 selon leur axe de pivotement X3 grâce à l'élasticité de la matière de la paroi annulaire 5. Lorsque l'épaulement externe 19 entre en appui contre l'épaulement interne 21, comme précisé ci-avant, les éléments protubérants 23 sont en correspondance avec la gorge 20 sur la face externe 10 du contour annulaire 7, l'élasticité de la matière de la paroi annulaire 5 permettant alors aux éléments protubérants 23 de reprendre leur position normale (non tordus) et de pénétrer dans la gorge 20, bloquant ainsi la base réfrigérante 4 vis-à-vis de la paroi annulaire 5, le réceptacle 1 étant ainsi constitué. Une légère pression sur les organes de commande 24 permet de dégager les éléments protubérants 23 de la gorge 20, pour un démontage du réceptacle 1, la base réfrigérante 4 étant alors extraite de la paroi annulaire 5 en la sortant vers le haut, par l'ouverture supérieure 34 de la paroi annulaire 5.

L'usage d'une matière plastique pour la paroi annulaire 5 suffit à assurer une étanchéité entre l'épaulement externe 19 sur la base réfrigérante 4 et l'épaule interne 21 sur la paroi annulaire 5, d'autant que les ingrédients de la préparation culinaire froide se solidifient durant le traitement culinaire. On pourrait toutefois ajouter un joint d'étanchéité entre ledit épaulement externe 19 et ledit épaulement interne 21.

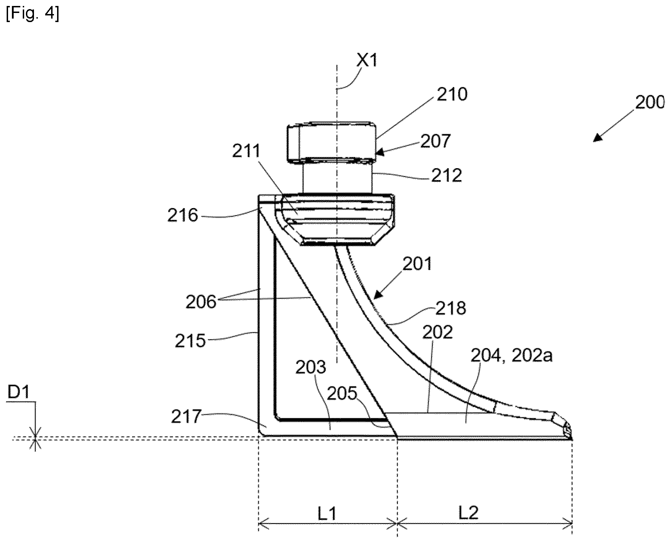

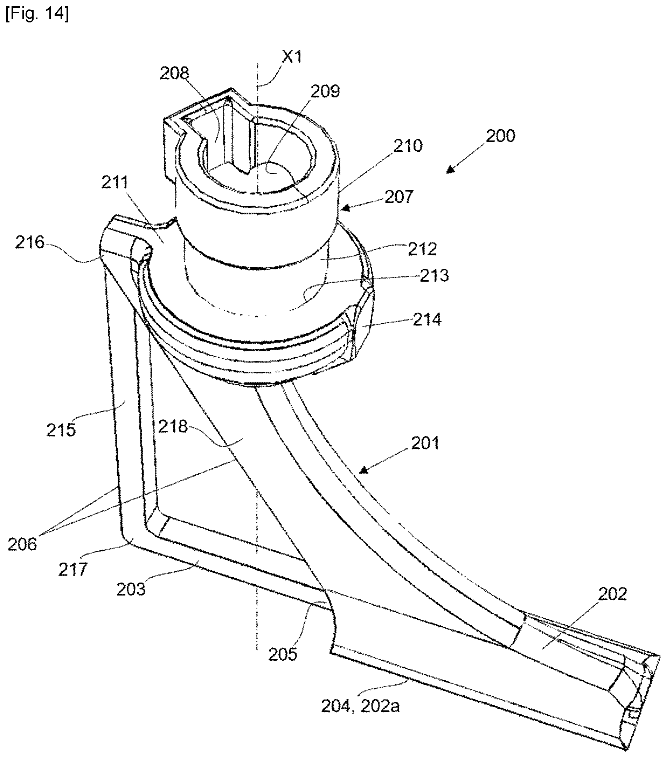

En regard notamment des [Fig. 2], [Fig. 4], [Fig. 9] et [Fig. 14], l'outil 200 comprend une pale 201 qui s'étend radialement par rapport au premier axe X1 de rotation dudit outil 200 monté sur l'arbre de rotation 108 du système d'entraînement 106 de la tête 105. Ce montage de l'outil 200 sur la tête 105 est mis en œuvre grâce à un premier organe d'accouplement 207 sur l'outil 200 coopérant avec un second organe d'accouplement 107 sur l'arbre de rotation 108, de sorte à bloquer la rotation autour de l'axe X1 et la translation le long dudit axe X1 entre ledit outil 200 et ledit arbre de rotation 108. L'outil 200 peut être démonté de la tête 105 après usage, pour son nettoyage. L'homme du métier pourra s'inspirer des appareils de préparation culinaire existants pour la mise en œuvre de premier organe d'accouplement 207 sur l'outil 200 et du second organe d'accouplement 107 sur l'arbre de rotation 108. On peut par exemple prévoir un pion 116 (voir [Fig. 2]) sur l'arbre de rotation 108, ledit pion 116 s'engageant dans une rainure 208 puis dans une cavité 209, présentes sur l'outil 200 (voir [Fig. 14]) pour bloquer la translation et la rotation selon l'axe X1 de l'outil 200 par rapport à l'arbre de rotation 108. Un ressort 109 placé sur l'arbre de rotation 108, au-dessus de l'outil 200, permet de pousser vers le bas ledit outil 200 et de maintenir ainsi le pion 116 dans la cavité 209. Ce type d'accouplement est également connu sous le nom « assemblage à baïonnette ».

De préférence, l'outil 200 comprend une pièce d'adaptation 210 qui comprend le premier organe d'accouplement 207, la pièce d'adaptation 210 étant montée de manière amovible sur une partie supérieure 211 de la pale 201, comme le montrent notamment les [Fig. 4] et [Fig. 14]. Cette pièce d'adaptation 210 comprend donc la rainure 208 et la cavité 209. La pièce d'adaptation 210 est assemblé de manière démontable avec la pale 201. Pour cela, la pièce d'adaptation 210 comprend une partie tubulaire 212 qui s'engage dans une ouverture 213 sur la partie supérieure 211, un mécanisme d'assemblage (non illustré), par exemple un pêne dans la partie supérieure 211 qui s'engage dans une gâche sur la partie tubulaire 212 pour un verrouillage entre ces pièces, le pêne étant actionné par un bouton de commande 214 pour permettre le déverrouillage de la pièce d'adaptation 210 vis à vis de la pale 201. Cela permet avantageusement d'adapter l'outil 200 sur divers appareils de préparation culinaire qui disposent chacun de leur pièce d'adaptation pouvant coopérer avec la pale 201 et qui dispose d'un premier organe d'accouplement adapté à un second organe d'accouplement présent sur un arbre de rotation d'un système d'entraînement présent sur une tête de l'appareil de préparation culinaire.

En regard notamment des [Fig. 4] et [Fig. 14], la pale 201 comprend en partie inférieure une lame 202 et une structure de renfort 206 de la lame 202, cette structure de renfort 206 comprenant un premier élément de renfort 215 s'étendant verticalement entre un bord 216 de la partie supérieure 211 et une extrémité 217 de la lame 202 et un second élément de renfort 218 s'étendant en oblique entre la partie supérieure 211 et la lame 202, comme le montre notamment la [Fig. 4]. Cette structure de renfort 206 participe au brassage des ingrédients de la préparation culinaire froide durant le traitement culinaire, ce qui permet un mélange plus efficace et une aération de la préparation culinaire froide qui est ainsi chargée en petites bulles d'air.

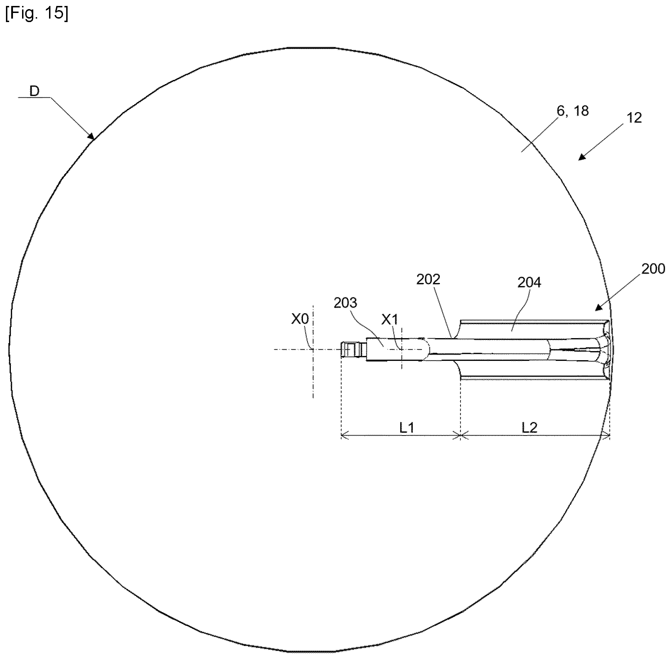

En regard notamment des [Fig. 4], [Fig. 9], [Fig. 14] et [Fig. 15], la lame 202 s'étend radialement par rapport au premier axe X1 et elle comprend une première partie 203 et une seconde partie 204. La première partie 203 est plus ou moins répartie de manière symétrique par rapport au premier axe X1 et elle est prolongée au niveau d'une extrémité 205 par la seconde partie 204 qui est décalée d'un côté du premier axe X1. Une variante envisageable serait de positionner la première partie 203 et la seconde partie 204 d'un même côté du premier axe X1, l'extrémité 217 de la lame 202 étant dans ce cas disposée dans l'alignement du premier axe X1. La première partie 203 est décalée vers le haut par rapport à la seconde partie 204 d'une distance D1 qui, de préférence, est comprise entre 0,5 mm et 3 mm, de préférence entre 1 mm et 2 mm. La première partie 203 de la lame 202 s'étend sur une longueur L1 comprise entre 35 mm et 42 mm, par exemple égale à 38 mm, et la seconde partie 204 de la lame 202 s'étend sur une longueur L2 comprise entre 40 mm et 45 mm, par exemple égale à 42 mm. Ainsi, la seconde partie 204 de la lame 202 vient en contact de la surface supérieure 6 de la base réfrigérante 4 et la première partie 203 de la lame 202 reste légèrement décalée de ladite surface supérieure 6, de la distance D1.

Durant la rotation de l'outil 200 autour du premier axe X1 et du second axe X2 engendrée par le mouvement planétaire, la première partie 203 de la lame 202 étale et tasse sur la surface supérieure 6 les ingrédients de la préparation culinaire en cours de traitement culinaire, ce qui favorise leur refroidissement, et la seconde partie 204 de la lame 202 racle la surface supérieure 6 pour détacher la préparation culinaire froide en cours de traitement culinaire, la structure de renfort 206 favorisant le brassage de ladite préparation culinaire froide en cours de traitement t son aération. La présence du ressort 109 permet de pousser l'outil 200 vers le bas, ce qui favorise un contact convenable de la seconde partie 204 sur la surface supérieure 6.

Comme évoqué précédemment, la surface supérieure 6 présente la forme d'un disque 18. Le disque 18 présente un diamètre D qui, de préférence, est compris entre 160 mm et 200 mm, par exemple égal à 185 mm. De préférence, la seconde partie 204 de la lame 202 et le diamètre D du disque 18 sont dimensionnés pour conserver un rapport L2/D inférieur à 0,3 afin de favoriser l'échange thermique entre la préparation culinaire froide en cours de traitement et la base réfrigérante 4. De préférence ce rapport L2/D est égal à 0,25.

Des variantes sont envisageables dans le cadre de l'invention, c'est-à-dire avec un réceptacle 1 qui comprend une base réfrigérante 4 et une paroi annulaire 5 assemblées entre elles de manière amovible et étanche, au moyen d'un système d'assemblage 8 identique ou comparable à celui décrit précédemment, d'autres variantes du système d'assemblage étant possibles.

Par exemple, l'outil 200 pourrait disposer d'une lame dont toute la longueur serait en contact avec la surface supérieure 6 pour la racler, la lame étant dans ce cas entièrement décalée sur un côté du premier axe X1 et ne comprenant pas de première partie 203. La longueur de la lame en contact avec la surface supérieure 6 pour la racler correspondrait alors à la longueur L2 de la seconde partie 204 de la lame 202.

Selon un autre exemple la surface supérieure 6 de la base réfrigérante pourrait ne pas être plane, par exemple être de forme concave, l'outil 200 étant dans ce cas adapté pour disposer d'au moins une partie venant racler ladite forme concave de la surface supérieure 6 durant la rotation de l'outil selon un mouvement planétaire. Cette surface supérieure 6 pourrait aussi être plane, mais d'une forme différente de celle d'un disque 18, par exemple une forme ovale ou elliptique.

Une variante de l'outil 200 est également possible sans la pièce d'adaptation 210, dans quel cas le premier organe d'accouplement 207 est directement mis en œuvre sur la partie supérieure 211 de la pale 201.

## Revendications

1. Réceptacle (1) pour des préparations culinaires froides telles que des glaces, des sorbets ou des yaourts glacés, lequel est apte à être logé de manière amovible dans un bol (101) d'un appareil (100) de préparation culinaire pour former un contenant (2) en partie supérieure (3) duquel peuvent être introduits des ingrédients de la préparation culinaire et un outil de traitement culinaire, caractérisé en que ledit réceptacle (1) comprend une base réfrigérante (4) et une paroi annulaire (5) montée amovible sur la base réfrigérante (4), la base réfrigérante (4) comprenant une surface supérieure (6) et un contour annulaire (7), un système d'assemblage (8) étant agencé entre une face externe (9) du contour annulaire (7) et une face interne (10) de la paroi annulaire (5) et configuré pour permettre un verrouillage étanche entre la face externe (9) et la face interne (10) lors d'une introduction de la base réfrigérante (4) dans la paroi annulaire (5), de sorte que la surface supérieure (6) et la face interne (10) définissent ledit contenant (2) une fois le réceptacle (1) formé, et pour permettre un déverrouillage de la face externe (9) et de la face interne (10) de sorte à pouvoir séparer la base réfrigérante (4) de la paroi annulaire (5) une fois le réceptacle (1) extrait du bol (101).

2. Réceptacle (1) selon la revendication 1, dans lequel la surface supérieure (6) est plane.

3. Réceptacle (1) selon la revendication 2, dans lequel la surface supérieure (6) forme un disque (18) défini dans un plan perpendiculaire à un axe médian (X0) de la base réfrigérante (4).

4. Réceptacle (1) selon l'une quelconque des revendications 1 à 3, dans lequel la paroi annulaire (5) comprend au moins un organe de préhension (11).

5. Réceptacle (1) selon la revendication 4, dans lequel la paroi annulaire (5) comprend deux organes de préhension (11) diamétralement opposés.

6. Réceptacle (1) selon l'une quelconque des revendications 1 à 5, dans lequel la base réfrigérante (4) comprend une pièce (12) en matériau conducteur thermique, de préférence en aluminium, la pièce (12) comprenant la surface supérieure (6), ladite base réfrigérante (4) comprenant une enceinte (13) en matière plastique, munie d'une ouverture supérieure (14), ladite pièce (12) étant configurée pour fermer ladite ouverture supérieure (14), ladite base réfrigérante (4) comprenant un matériau à changement de phase contenu dans l'enceinte (13).

7. Réceptacle (1) selon la revendication 6, dans lequel la pièce (12) comprend sur sa face inférieure (25) des ailettes (15) logées dans l'enceinte (13) et s'étendant dans le matériau à changement de phase.

8. Réceptacle (1) selon l'une quelconque des revendications 6 ou 7, dans lequel l'enceinte (13) comprend une embase (16) sur la face inférieure de laquelle sont agencés des patins (17), lesdits patins étant aptes à venir au contact d'un fond (102) du bol (101) lors de l'introduction du réceptacle (1) dans le bol (101).

9. Réceptacle (1) selon l'une quelconque des revendications 1 à 8, dans lequel le système d'assemblage (8) comprend, sur la face externe (9) du contour annulaire (7), un épaulement externe (19) et une gorge (20) et, sur la face interne (10) de la paroi annulaire (5), un épaulement interne (21) apte à recevoir en appui l'épaulement externe (19) lors de l'introduction de la base réfrigérante (4) dans la paroi annulaire (5) et un dispositif d'enclenchement (22) qui comporte au moins un élément protubérant (23) apte à s'engager dans la gorge (20) lorsque l'épaulement externe (19) entre en appui sur l'épaulement interne (21), ledit dispositif d'enclenchement (22) comprenant des moyens de rappel de l'au moins un élément protubérant (23) en position engagée dans la gorge (20) et au moins un organe de commande (24) configuré pour dégager l'au moins un élément protubérant (23) de la gorge (20).

10. Appareil (100) de préparation culinaire, lequel comprend un corps (103) présentant une base (104), une tête (105) s'étendant au-dessus de la base (104), un bol (101) configuré pour être engagé sur la base (104), la tête (105) étant configurée pour recevoir un outil (200) de traitement culinaire et comprenant un système d'entraînement (106) de l'outil (200) de traitement culinaire selon un mouvement planétaire, et un réceptacle (1) selon l'une quelconque des revendications 1 à 9, ledit réceptacle (1) étant configuré pour épouser le bol (101) lors de son introduction dans celui-ci, la tête (105) étant configurée pour être déplacée dans une position engagée où l'outil (200) de traitement culinaire se loge dans le contenant (2) du réceptacle (1) placé dans le bol (101) et est apte à racler la surface supérieure (6) lors de sa mise en mouvement planétaire ou dans une position dégagée où l'outil (200) de traitement culinaire est éloigné du dessus du bol (101), permettant l'extraction du réceptacle (1) hors du bol (101).

11. Appareil (100) de préparation culinaire selon la revendication 10, dans lequel la tête (105) est montée pivotante vis-à-vis du corps (103) pour pivoter de la position engagée vers la position dégagée, et vice-versa.

12. Appareil (100) de préparation culinaire selon l'une quelconque des revendications 10 ou 11, dans lequel le réceptacle (1) est conforme à la revendication 3, et dans lequel la surface supérieure (6) est plane et forme un disque (18) perpendiculaire à un axe de rotation (X1) de l'outil (200) de traitement culinaire, ledit outil (200) de traitement culinaire comprenant une lame (202) agencée perpendiculairement à l'axe de rotation (X1) et raclant le disque (18) durant sa mise en mouvement planétaire.
